# EUROPÄISCHE PATENTANMELDUNG

(11) **EP 0 844 427 A1**
(43) Veröffentlichungstag der Anmeldung: **27.05.1998**
(21) Anmeldenummer: 97120082.9
(22) Anmeldetag: 17.11.1997
(51) Int. Cl.: F16L 21/02, F16L 25/06, F16L 21/08

(54) **Rohrverbindung**

(30) Priorität: 22.11.1996 DE 29620324 U
(71) Anmelder: VIESSMANN WERKE GmbH & CO., 35107 Allendorf/Eder (DE)
(72) Erfinder: Burger, Helmut Prof. Dr., 35216 Biedenkopf-Kombach (DE)
(74) Vertreter: Wolf, Günter, Dipl.-Ing.

(57) **Zusammenfassung**

Die Erfindung betrifft eine Rohrverbindung, bestehend aus einer die benachbarten Rohrendbereiche (1') zweier axial gegeneinander gerichteter, außendurchmessergleicher Rohre (1) überdeckenden Außenhülse (3), zwischen der und den Rohrendbereichen (1') Dichtungselemente angeordnet sind. Erfindungsgemäß sind die Dichtungselemente (4) als in nach innen offenen Ringnuten (5) der Hülse (3) angeordnete O-Ringe (4') ausgebildet. Die Hülse (3) ist daher mit einem parallel zur Rohrachse (A) orientierten Spannbügel (6) übergriffen, dessen Spannschenkel (7) ringförmig die Rohrendbereiche (1') neben den Enden (3') der Hülse (3) umfassen und daß zwischen der Hülse (3) und dem Spannbügel (6) ist mindestens ein radial wirkendes Spannelement (8) angeordnet.

## Beschreibung

Die Erfindung betrifft eine Rohrverbindung, bestehend aus einer die benachbarten Rohrendbereiche zweier axial gegeneinander gerichteter, außendurchmessergleicher Rohre überdeckenden Außenhülse, zwischen der und den Rohrendbereichen Dichtungselemente angeordnet sind.

Eine derartige Rohrverbindung nimmt Bezug auf die allgemein bekannte Verbindungsausbildung von Rohren, bei der mit einem dritten Element die beiden Enden zu verbindenden Rohre miteinander abgedichtet verbunden werden, d.h., hierbei werden die mit Gewinde versehenen Rohrenden unter beigefügtem Dichtungsmaterial in eine Muffe eingeschraubt oder bei Glattrohren in eine entsprechend glatte Hülse eingelötet, wobei das Lötmaterial die Dichtungs- und insoweit auch die Haltefunktion übernimmt.

Abgesehen davon ist nach dem DE-U-92 13 767 eine besondere Rohrverbindung bekannt, die mit einer an einem Rohrende verrasteten Überwurfmutter ausgestattet ist, die wiederum mit ihrem anderen Ende ebenfalls unter Einfügung von Dichtungselementen an beiden Rohrendbereichen am anderen Rohr zu verschrauben ist. Bei den Dichtungselementen handelt es sich hierbei um O-Dichtungsringe, und das an ein wesentlich außendurchmessergrößere Rohr anzuschließende Rohrende ist zweifach gekröpft, um einerseits eine Nut für einen O-Ring und andererseits ein Widerlager für die Überwurfmutter zu bilden, die auf der anderen Seite den dortigen O-Ring beim Festschrauben gegen einen vor dem Gewinde angeordneten Konus preßt.

Abgesehen von Rohrverbindungen der eingangs genannten Art liegt der Erfindung die Aufgabe zugrunde, diese nicht nur zu vereinfachen, sondern auch dahingehend auszubilden, daß die beiden Rohre, für deren Verbindung keinerlei Verformungen oder Sonderausbildungen vorzusehen sind, komplikationslos in die einfach herzustellende und gewindefreie Außenhülse eingeschoben werden können und daß für die axiale Festlegung der eingeschobenen Rohre zueinander lediglich ein einfaches und in der Regel immer verfügbares Hilfswerkzeug, wie Schraubenzieher, Steck- oder Maulschlüssel erforderlich ist.

Diese Aufgabe ist mit einer Rohrverbindung der eingangs genannten Art nach der Erfindung dadurch gelöst, daß die Dichtungselemente als in sich innen offene Ringnuten der Hülse angeordnete O-Ringe ausgebildet sind und die Hülse mit einem parallel zur Rohrachse orientierten Spannbügel übergriffen ist, dessen Spannschenkel ringförmig die Rohrendbereiche neben den Enden der Hülse umfassen und daß zwischen der Hülse und dem Spannbügel mindestens ein radial wirkendes Spannelement angeordnet ist.

Der Innendurchmesser der Außenhülse ist dabei mit Schiebetoleranz an den Außendurchmesser der beiden zu verbindenen Rohre angepaßt, und die O-Ringdichtungen sind, wie üblich, bezüglich ihres Innendurchmessers so bemessen, daß sie die Innenumfangsfläche der Hülse etwas überragen. Damit ist an sich schon dem Abdichtungserfordernis genügt, wobei aber nichts entgegensteht, im Bedarfsfall hoher Drücke in vorteilhafter Weiterbildung mehrere Nuten und O-Ringe an der Hülse vorzusehen, ohne etwas am Grundprinzip der erfindungsgemäßen Rohrverbindung ändern zu müssen. Dem axialen Festlegungserfordernis der beiden zu verbindenden Rohre dient der speziell ausgebildeten Spannbügel, mit dem, was noch näher erläutert wird, die beiden eingeschobenen Rohre quer zur Außenhülse verspannt werden. Wie sich dabei gezeigt hat, wirkt sich die damit verbundene und unvermeidbare exzentrische Deformation der O-Ringe nicht nachteilig auf ihre Abdichtfunktion aus, da sich diese mit Rücksicht auf die geringe Schiebetoleranz zwischen Außenhülse und Rohrendbereich nur im Zehntelmillimeterbereich bewegt.

Wesentlich beim Ganzen ist, d.h. bei der Installation von im Zuge von Leitungsverlegungen herzustellenden Rohrverbindungen, daß außer der Verwendung von einfachen Hilfswerkzeugen der oben genannten Art nichts erforderlich und die Rohrverbindung lediglich durch quer axiale Verspannung festzulegen ist, d.h., aufwendigere handwerkliche Maßnahmen vor Ort entfallen, und insbesondere sind auch vor Ort keinerlei Veränderungen an den lediglich in die Außenhülse einzuschiebenden Rohrenden erforderlich.

Die erfindungsgemäße Rohrverbindung und deren vorteilhaften Weiterbildungen werden nachfolgend anhand der zeichnerischen Darstellung von Ausführungsbeispielen näher erläutert.

Es zeigt
- Fig. 1: die Rohrverbindung in Seitenansicht und im montierten Zustand;
- Fig. 2A: einen mittigen Verikalschnitt durch den Spannbügel;
- Fig. 2B: einen Schnitt durch den Spannbügel längs Linie II-II in Fig. 1;
- Fig. 3: im Schnitt die Außenhülse;
- Fig. 4: im Schnitt eine besondere Ausführungsform der Außenhülse;
- Fig.5A-E: stark vergrößerte Schnitte durch den Anordnungsbereich des Spannelementes;
- Fig. 6: eine weitere Ausführungsform der Rohrverbindung und
- Fig. 7: im Schnitt eine besondere Ausführungsform der Rohrverbindung.

Die Rohrverbindung besteht nach wie vor aus einer die benachbarten Rohrendbereiche 1' zweier axial gegeneinander gerichteter, außendurchmessergleicher Rohre 1 überdeckenden Außenhülse 3, zwischen der und den Rohrendbereichen 1' Dichtungselemente 4 angeordnet sind.

Für eine solche Rohrverbindung ist nun wesentlich, daß die Dichtungselemente 4 als in nach innen offenen Ringnuten 5 der Hülse 3 angeordnete O-Ringe 4' ausgebildet sind und die Hülse 3 mit einem parallel zur Rohrachse A orientierten Spannbügel 6 übergriffen ist, dessen Spannschenkel 7 ringförmig die Rohrendbereiche 1' neben den Enden 3' der Hülse 3 umfassen und daß zwischen der Hülse 3 und dem Spannbügel 6 mindestens ein radial wirkendes Spannelement 8 angeordnet ist.

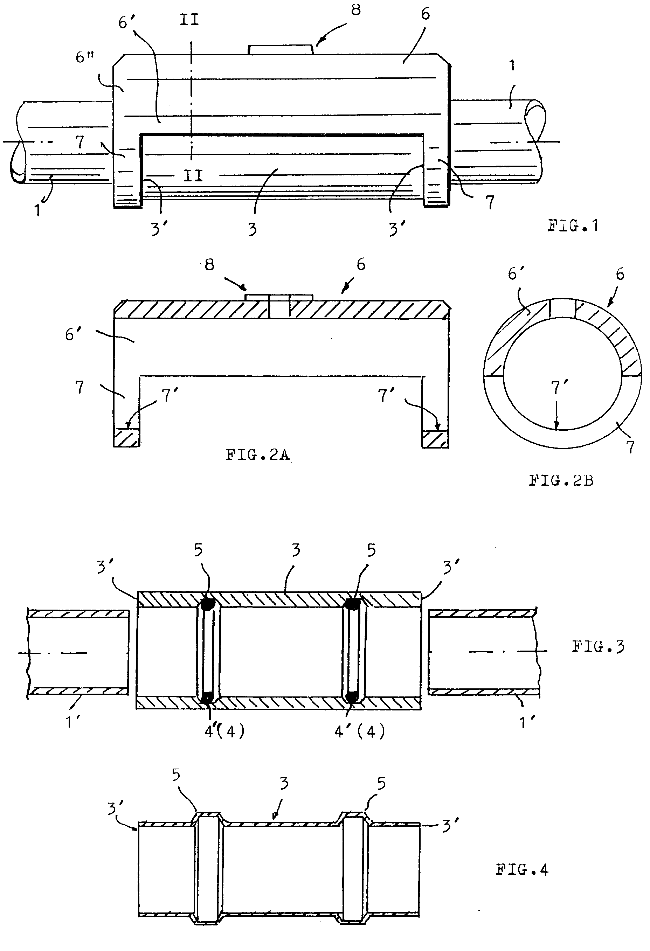

Nach außen tritt die Rohrverbindung, wie in Fig. 1 dargestellt, in Erscheinung, wobei die Fig.1 insofern bereits eine bevorzugte Ausführungsform zeigt, als hierbei der Spannbügel 6 in Form eines Halbzylinders 6' ausgebildet ist, der an seinen Randbereichen 6'' in die entsprechend halbzylindrischen Spannschenkel 7 übergeht, wie dies in den Fig. 2A, B verdeutlicht ist.

Wie die Außenhülse 3 (siehe Fig. 4) kann auch der Spannbügel 6 als Preßformteil aus Blech gebildet werden, wobei es ohne weiteres möglich ist, bei der Preßformherstellung für belastungsgemäße Versteifungsprägungen zu sorgen.

Bei der Herstellung bzw. zur Erstellung der Rohrverbindungen vor Ort sind lediglich die mit O-Ringen 4' bestückte Außenhülse 3 und der Spannbügel 6 gemeinsam auf eines der Rohre 1 aufzuschieben, danach ist der Rohrendbereich 1' des anderen Rohres 1 einzuschieben und danach ist das noch näher zu erläuternde Spannelement 8 mit einem geeigneten Hilfswerkzeug zu betätigen, um alle beteiligten Elemente gegeneinander zu verspannen. Dabei kann durchaus zusätzlich in Betracht gezogen werden, eine zusätzliche Ringdichtung zwischen die Stoßenden der Rohrendbereiche einzubringen.

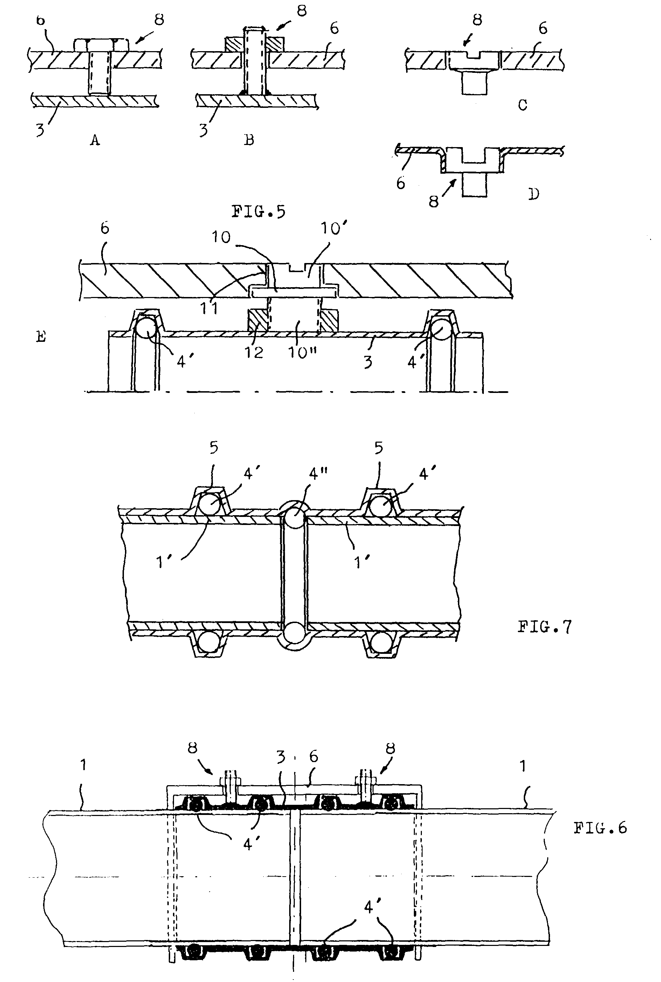

Ferner und wie in Fig. 6 dargestellt, steht nichts entgegen, je nach Abdichtungserfordernis bei entsprechender Längenbemessung von Außenhülse 3 und Spannbügel 6 in der Außenhülse 3 zwei oder mehr O-Dichtungsringe 4' pro Rohrendbereich 1' anzuordnen.

Abgesehen davon, daß die Spannelemente 8 entweder durch eine einfach in den Spannbügel 6 einschraubbare Spannschraube 9 oder umgekehrt durch einen den Spannbügel 6 durchgreifenden, auf der Außenhülse radial aufgesetzten und befestigten Gewindebolzen 9' mit Mutter dargestellt werden kann (siehe Fig. 5A, B), werden diesbezügliche Ausführungsformen nach den Fig. 5C bis E bevorzugt und von diesen wiederum die Ausführungsform nach Fig. 5E.

Die Ausführungsformen nach Fig. 5C, D entsprechen dabei im wesentlichen der nach Fig. 5A, nur mit dem Unterschied, daß es sich hierbei praktisch um Madenschrauben handelt, wobei im Falle der Fig. 5D der Spannbügel 6 aus preßverformtem Blech besteht.

Bei der bevorzugten Ausführungsform nach Fig. 5E ist das mindestens eine Spannelement 8 in Form eines von innen gegen den Spannbügel 6 abgestützten Spannbolzens 10 ausgebildet, der mit seinem Stellkopf 10' eine Öffnung 11 im Spannbügel 6 durchgreift und der mit seinem anderen Ende 10'' in einen Gewindering 12 der Hülse 3 eingeschraubt ist. Um bei dieser Ausführungsform die Verspannung zwischen Spannbügel 6 und Außenhülse 3 zu bewirken, muß hierbei der Spannbolzen 10 in bezug auf den Gewindering 12 in Ausschraubrichtung gedreht werden.

Egal wie nun das Spannelement 8 ausgebildet ist, wesentlich ist immer nur, daß Spannbügel 6 und Außenhülse 3 im Sinne des Pfeiles P (siehe Fig. 5A) zueinander gespreizt werden, um die Spannschenkel 7 an den Rohren 1 zur Anlage zu bringen und die Rohrendbereiche 1' von innen gegen die Außenhülse 3 zu verspannen, was, wie erwähnt, nur im Bereich von Zehntelmillimetern erfolgt. Vorteilhaft sind dabei die Spannschenkel 7 mit reibungserhöhend strukturierten Rohranlageflächen 7' versehen, was nicht besonders dargestellt ist, da ohne weiteres vorstellbar.

## Patentansprüche

1. Rohrverbindung, bestehend aus einer die benachbarten Rohrendbereiche (1') zweier axial gegeneinander gerichteter, außendurchmessergleicher Rohre (1) überdeckenden Außenhülse (3), zwischen der und den Rohrendbereichen (1') Dichtungselemente (4) angeordnet sind,
**dadurch gekennzeichnet,**
daß die Dichtungselemente (4) als in nach innen offenen Ringnuten (5) der Hülse (3) angeordnete O-Ringe (4') ausgebildet sind und die Hülse (3) mit einem parallel zur Rohrachse (A) orientierten Spannbügel (6) übergriffen ist, dessen Spannschenkel (7) ringförmig die Rohrendbereiche (1') neben den Enden (3') der Hülse (3) umfassen und daß zwischen der Hülse (3) und dem Spannbügel (6) mindestens ein radial wirkendes Spannelement (8) angeordnet ist.

2. Rohrverbindung nach Anspruch 1,
**dadurch gekennzeichnet,**
daß der Spannbügel (6) in Form eines Halbzylinders (6') ausgebildet ist, der an seinen Randbereichen (6'') in die entsprechend halbzylindrischen Spannschenkel (7) übergeht.

3. Rohrverbindung nach Anspruch 1 oder 2,
**dadurch gekennzeichnet,**
daß die Hülse (3) und der Spannbügel (6) mit seinen Spannschenkeln (7) als Preßformteile ausgebildet sind.

4. Rohrverbindung nach einem der Ansprüche 1 bis 3,
**dadurch gekennzeichnet,**
daß das mindestens eine mittig am Spannbügel (6) angeordnete Spannelement (8) in Form einer in den Spannbügel (6) eingeschraubten Spannschraube (9) ausgebildet ist.

5. Rohrverbindung nach einem der Ansprüche 1 bis 3,
**dadurch gekennzeichnet,**
daß das mindestens eine Spannelement (8) in Form eines von innen gegen den Spannbügel (6) abgestützten Spannbolzens (10) ausgebildet ist, der mit seinem Stellkopf (10') eine Öffnung (11) im Spannbügel (6) durchgreift und der mit seinem anderen Ende (10'') in einen Gewindering (12) der Hülse (3) eingeschraubt ist.

6. Rohrverbindung nach einem der Ansprüche 1 bis 5,
**dadurch gekennzeichnet,**
daß die Hülse (3) im Bereich der beiden Rohrendbereiche (1') jeweils mindestens zwei Ringnuten (5) aufweist, zwischen denen je ein Spannelement (9, 9') angeordnet ist.

7. Rohrverbindung nach einem der Ansprüche 1 bis 6,
**dadurch gekennzeichnet,**
daß die Spannschenkel (7) mit reibungserhöhend strukturierten Rohranlageflächen (7') versehen sind.

8. Rohrverbindung nach einem der Ansprüche 1 bis 7,
**dadurch gekennzeichnet,**
daß im Bereich der Stoßfuge zwischen den beiden Rohrendbereichen (1') ebenfalls ein O-Dichtungsring angeordnet ist.
